# EUROPÄISCHE PATENTSCHRIFT

(11) **EP 1 756 446 B1**
(45) Veröffentlichungstag und Bekanntmachung des Hinweises auf die Patenterteilung: **05.03.2008**
(21) Anmeldenummer: 05748419.8
(22) Anmeldetag: 09.06.2005
(51) Int. Cl.: F16F 9/516, F16F 9/49, F16F 9/32, F16F 9/00, F16F 9/34, F16F 9/36

(54) **VORRICHTUNG ZUR DÄMPFUNG BZW. ABBREMSUNG VON BEWEGLICHEN MÖBELTEILEN VON MÖBELSTÜCKEN**
DEVICE FOR DAMPING OR DECELERATING MOVABLE PARTS OF PIECES OF FURNITURE
SYSTEME D'AMORTISSEMENT OU DE FREINAGE DE PIECES MOBILES DE MEUBLES

(30) Priorität: 16.06.2004 DE 202004009535 U
(43) Veröffentlichungstag der Anmeldung: 28.02.2007
(73) Patentinhaber: Alfit AG, A-6840 Götzis (AT)
(72) Erfinder: GRABHER, Günter, A-6972 Fussach (AT)
(74) Vertreter: Helber, Friedrich
(86) Internationale Anmeldenummer: PCT/EP2005/006189
(87) Internationale Veröffentlichungsnummer: WO 2005/124185

(56) Entgegenhaltungen:
- EP-A- 1 215 414
- EP-A- 1 437 524
- DE-A1- 3 810 841
- DE-U1- 20 307 522
- GB-A- 2 122 305
- US-B1- 6 390 457
- PATENT ABSTRACTS OF JAPAN Bd. 014, Nr. 311 (M-0994), 4. Juli 1990 (1990-07-04) & JP 02 102939 A (DAIHATSU MOTOR CO LTD), 16. April 1990 (1990-04-16)

## Beschreibung

Die Erfindung betrifft eine Vorrichtung zum Dämpfen bzw. Abbremsen der Bewegung von relativ zu einem unbeweglichen Möbelteil beweglichen Möbelteilen zumindest während eines Teilabschnitts der gesamten Relativbewegung mit einem Zylinder , in welchem ein Kolben längsverschieblich gelagert ist, welcher innerhalb des Zylinders auf seinen gegenüberliegenden Stirnseiten in Abhängigkeit von seiner Verschiebungsstellung größenveränderliche, mit einem flüssigen Dämpfungsmedium gefüllte Arbeitsräume bildet, die über im Kolben vorgesehene Überström-Öffnungen oder Kanäle einen gedrosselten Übertritt des flüssigen Dämpfungsmediums von einem zum anderen Arbeitsraum ermöglichen, wobei auf einer Seite des Kolbens eine abgedichtet aus dem zugeordneten Ende des Zylinders herausgeführte Kolbenstange angeschlossen ist, über deren kolbenabgewandtes äußeres Ende die Bewegung des zu dämpfenden oder abzubremsenden Möbelteils auf den Kolben übertragen wird, und zum Ausgleich des sich durch das Volumen der Kolbenstange beim Einfahren verändernden Gesamtvolumens der Arbeitsräume eine Volumen-Ausgleichsvorrichtung vorgesehen und der Drosselquerschnitt der Überström-Öffnungen oder Kanäle in Abhängigkeit von der Verschiebungsstellung des Kolbens derart veränderlich ausgebildet ist, dass sich während des Dämpfungs- oder Bremshubs eine sich ändernde Dämpfungs- bzw. Bremscharakteristik ergibt, und die Kolberistange an dem mit Überström-Öffnungen versehenen Kolben in an sich bekannter Weise um einen vorgegebenen Längshub verschieblich angekoppelt ist und in ihrem kolbenzugewandten Endbereich eine mit Übersträm-Öffnungen mit im Vergleich zum Querschnitt der Kolben-Überström-Öffnungen veringertem Drosselquerschnitt versehene Rückschlagscheibe verringerten Außendurchmessers aufweist, welche beim dämpfenden bzw. bremsenden Arbeitshub in dichtende Anlage an die zugewandte Kolben-Stirnseite, beim Rückhub dagegen in eine von der Kolben-Stirnseite beabstandete Stellung verschoben ist.

Derartige Dämpfungs- bzw. Bremsvorrichtungen dienen dann im Möbelbau dazu, um die beim schnellen schwungvollen Schließen von Türen bzw. Schließen von Schubladen von Schränken bei der stoßartigen Abbremsung des am Korpus anschlagenden bewegten Möbelteils entstehenden Beanspruchungen und Geräusche zu vermeiden oder doch weitgehend zu verringern. Solche mit gasförmigen Stoffen, wie z.B. atmosphärischer Luft oder viskosen Flüssigkeiten, wie z.B. Silikonöl als Dämpfungsmedium arbeitende Dämpfungsvorrichtungen sind in unterschiedlichen Ausgestaltungen bekannt (z.B. DE 195 22 254 A1). Gegenüber den mit gasförmigem Dämpfungsmedium arbeitenden Vorrichtungen haben die mit flüssigem Dämpfungsmedium arbeitenden Vorrichtungen den Vorteil, dass diese flüssigen Dämpfungsmedien praktisch inkompressibel sind, so dass sie keine Rückfederungseigenschaften aufweisen, welche den beweglichen Möbelteil nach Erreichen der Schließstellung wieder etwas aus der eigentlichen Schließstellung zurück zu bewegen suchen. Außerdem können Flüssigkeits-Dämpfer mit vergleichsmäßig geringeren Abmessungen hergestellt werden. Dabei tritt das Problem auf, dass die zur Dämpfung eines bewegten Möbelteils zu erzeugenden Dämpfungs- bzw. Bremskräfte auch von der Masse des jeweiligen Möbelteils bzw. dessen Schließgeschwindigkeit abhängen.

Eine Vorrichtung der eingangs erwähnten Art ist in EP-A-1 437 524 beschrieben.

JP(A) 02-102939 offenbart die Merkmale des Oberbegriffs Anspruch 1, aber in einen anderen Anwendungsgebiet.

Der Erfindung liegt die Aufgabe zugrunde, diese Vorrichtung funktionell zu verbessern.

Ausgehend von einer Vorrichtung der eingangs erwähnten Art wird diese Aufgabe erfindungsgemäß dadurch gelöst, dass zwischen der Rückschlagscheibe und dem Kolben eine Feder angeordnet ist, welche eine die einander zugewandten Stirnseiten der Rückschlagscheibe und des Kolbens in die von einander beabstandete Stellung vorspannt.

Die Feder weist dabei bevorzugt die Form einer in Umfangsrichtung gewellten Scheibe aus federelastischem Metall auf.

Die Feder kann dann in raumsparend zwischen den einander zugewandten Stirnseiten der Rückschlagscheibe und des Kolbens angeordnet werden.

Von Vorteil ist eine Weiterbildung, bei welcher die Kolbenstange an dem mit Überström-Öffnungen versehenen Kolben in an sich bekannter Weise um einen vorgegebenen Längshub verschieblich angekoppelt ist und in ihrem kolbenzugewandten Endbereich eine mit Überström-öffnungen mit im Vergleich zum Querschnitt der Kolben-Überström-Öffnungen verringertem Drosselquerschnitt versehene Rückschlagscheibe verringerten Außendurchmessers aufweist, welche beim dämpfenden bzw. bremsenden Arbeitshub in dichtende Anlage an die zugewandte Kolben-Stirnseite, beim Rückhub dagegen in eine von der Kolben-Stirnseite beabstandete Stellung verschoben ist. Dadurch wird erreicht, dass beim Dämpfungshub die Drosselwirkung in der im Drosselquerschnitt verringerten Oberström-Offnungen der Rückschlagscheiben erzeugt wird, während das Dämpfungsmedium beim Rückhub über die im Querschnitt größer bemessene Überström-Öffnungen im Kolben übertreten kann. D.h. die gewünschte hohe Dämpfungswirkung tritt nur beim Arbeitshub auf, während beim Rückhub keine oder nur geringere Dämpfungskräfte erzeugt werden.

Zur Änderung der Dämpfungs- bzw. Bremscharakteristik kann in der Zylinder-Innenwandung wenigstens ein zumindest abschnittsweise in Hubrichtung verlaufender vertiefter Überström-Kanal vorgesehen sein, dessen Querschnitt in Hubrichtung entsprechend der gewünschten Drosselcharakteristik veränderlich ausgebildet ist.

Der Querschnitt des wenigstens einen Überström-Kanals wird dabei zweckmä-ßig so gewählt, dass er sich beim Dämpfungshub von der Ausgangs-Hubstellung ausgehend in Zylinder-Längsrichtung verringert. Dadurch wird eine Dämpfungscharakteristik erzielt, bei welcher die Dämpfungswirkung sich mit zunehmendem Arbeitshub erhöht.

Um zu erreichen, dass bei Erreichen des Endes des Arbeitshubs keinerlei die Kolbenstange des Dämpfers im Sinne eines Zurückfederns beaufschlagenden Kräfte auftreten können, kann in erfindungsgemäßer Weiterbildung der Zylinder in einem dem abschließenden Dämpfungshub des Kolbens zugewandten Endbereich einen vergrößerten Durchmesser aufweisen. Sobald der Kolben in diesen Endbereich gelangt, kann also das Dämpfungsmedium ungedrosselt über den äußeren Umfang des Kolbens zurückströmen und einen Druckausgleich zwischen den beiden Arbeitsräumen herstellen.

Die Volumen-Ausgleichsvorrichtung der erfindungsgemäßen Vorrichtung kann dabei einen mit dem von der Kolbenstange durchsetzten Arbeitsraum des Zylinders verbundenen, durch aus dem Arbeitsraum übertretendes flüssiges Druckmedium volumenvergrößerbaren Ausgleichsraum aufweisen, dessen Volumen sich bei Rückführung des Dämpfungsmediums in den Arbeitsraum wieder verkleinert.

Im Sinne eines kompakten Aufbaus der Vorrichtung empfiehlt es sich dabei, den Ausgleichsraum in einer an den von der Kolbenstange durchsetzten Arbeitsraum anschließenden Verlängerung des Zylinders auszubilden.

Dabei ist eine Ausgestaltung zweckmäßig, bei welcher der Ausgleichsraum als zwischen einer die Kolbenstange umgebenden langgestreckten Führungshülse und der Innenwandung der Zylinder-Verlängerung vorgesehene Ringraum ausgebildet ist, welcher zumindest zum größeren Teil durch einen durch übertretendes flüssiges Druckmedium elastisch zusammendrückbaren Einsatz ausgefüllt ist.

Der elastisch zusammendrückbare Einsatz kann dabei als dem Ringraum im Wesentlichen entsprechend geformter Ringkörper ausgebildet sein, welcher flüssigkeitsdichte äußere Wandungen aufweist und innerhalb der äußeren Wandung mit einem elastisch zusammendrückbaren Medium, beispielsweise einem geschlossenzelligen Schaumstoff aus Gummi oder elastomerem Kunststoff gefüllt ist.

Durch Abwandlung des vorstehend beschriebenen Ausführungsbeispiels derart, dass der Kolben im radial äußeren Bereich seiner zur Rückschlagscheibe weisenden Stirnfläche zumindest über einen Teilabschnitt des Kolben-Umfangs mit einer schrägen Anfasung versehen ist, und dass in der zum Kolben weisenden im wesentlichen ebenflächigen Stirnseite der Rückschlagscheibe zu der bzw. den Überström-Öffnung(en) versetzt wenigstens eine im der Innenfläche des Zylinders gegenüberliegenden äußeren radialen Randbereich geschlossene, im radial inneren Bereich eine Mittelöffnung im Kolben übergreifende Vertiefung vorgesehen ist, kann sichergestellt werden, dass ein gegebenenfalls unter bestimmten Arbeitsbedingungen in einem der Arbeitsräume auftretender Überdruck zum anderen Arbeitsraum abgeblasen wird und dadurch Funktionsstörungen oder eine Zerstörung der Vorrichtung vermieden wird.

Die Erfindung ist in der folgenden Beschreibung von zwei Ausführungsbeispielen in Verbindung mit der Zeichnung näher erläutert, und zwar zeigt:
- Fig. 1: einen Längsmittelschnitt durch ein erstes Ausführungsbeispiel einer in der erfindungsgemäßen Weise aufgebauten Vorrichtung zum Dämpfen bzw. Abbremsen von beweglichen Möbelteilen in der nach Abschluss des Dämpfungshubes eingenommenen Endposition des Kolbens;
- Fig. 2: eine der Figur 1 entsprechende Schnittansicht der Vorrichtung in der Ausgangsposition des Kolbens vor Auslösung des Dämpfungshubs mit ausgefahrener Kolbenstange;
- Fig. 3: den in Fig. 2 innerhalb des strichpunktierten Kreises 3 gelegenen Teilbereich der erfindungsgemäßen Vorrichtung in vergrößertem Maßstab;
- Fig. 4: eine Seitenansicht einer in Fig. 3 zwischen den einander zugewandten Stirnseiten der Rückschlagscheibe und des Kolbens der Vorrichtung angeordneten Feder;
- Fig. 5: eine Draufsicht auf die Feder gesehen in Richtung des Pfeils 5 in Fig. 4;
- Fig 6: den in Fig. 1 innerhalb des strichpunktierten Kreises 6 gelegenen Teilbereich der erfindungsgemäßen Vorrichtung in vergrößertem Maßstab,
- Fig.7: einen Längsmittelschnitt durch eine gegenüber der Rückschlagscheibe des in den Figuren 1 bis 6 gezeigten ersten Ausführungsbeispiels der erfindungsgemäßen Vorrichtung abgewandelten Rückschlagscheibe;
- Fig.8: eine Unteransicht der abgewandelten Rückschlagscheibe gesehen in Richtung des Pfeils 8 in Fig. 7;
- Fig.9: einen Längsmittelschnitt durch einen mit der in den Figuren 7 und 8 gezeigten Rückschlagscheibe zusammenwirkenden abgewandelten Kolben der Vorrichtung;
- Fig. 10: eine der Fig. 6 im gewählten Ausschnitt und der Funktionsstellung der dargestellten Bauteile entsprechende Darstellung eines Teilbereichs eines zweiten Ausführungsbeispiels der erfindungsgemässen Vorrichtung mit entsprechend den Figuren 7 und 8 abgewandelter Rückschlagscheibe und dem in Fig. 9 gezeigten Kolben;
- Fig.11: eine der Fig. 10 entsprechende Darstellung, in welcher die Rückschlagscheibe, der Kolben und die zwischen deren einander zugewandten Stirnseiten angeordnete Feder des zweiten Ausführungsbeispiels in einer sich bei Übersteigen des zulässigen Drucks im Dämpfungsmedium in einem der Arbeitsräume einstellenden Sicherungsposition dargestellt sind, in welcher die Feder durch den Überdruck zusätzlich so verformt ist, dass sie einen Überströmdurchlass zum anderen Arbeitsraum bildet; und
- Fig. 12: den in Fig. 11 innerhalb des strichpunktierten Kreises 12 liegenden Teilbereichs in vergrössertem Maßstab.

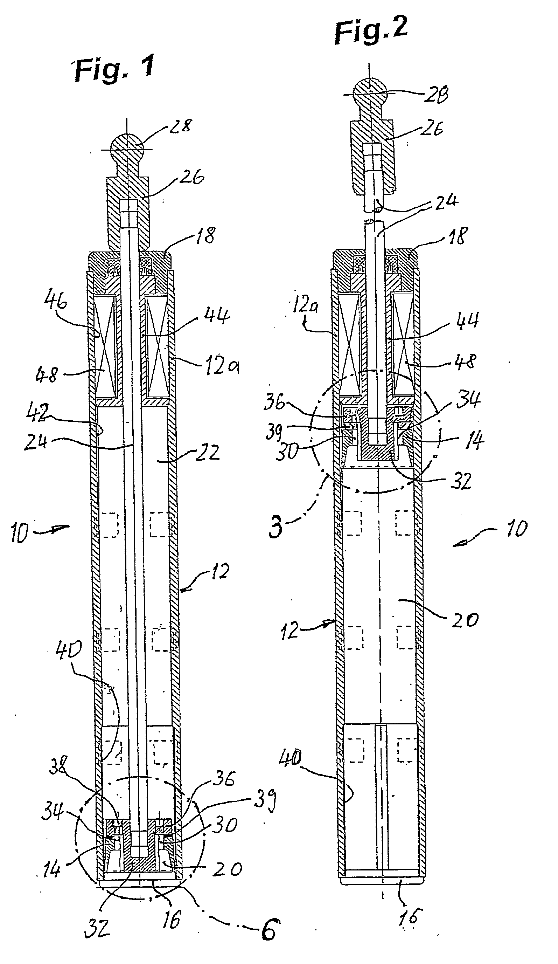

Die in den Figuren 1 und 2 gezeigte, in ihrer Gesamtheit mit 10 bezeichnete erfindungsgemäße Vorrichtung zur Dämpfung bzw. Bremsung von beweglichen Möbelteilen, z.B. Schubladen oder Türflügeln, weist ein als langgestreckter hohler Zylinder 12 ausgebildetes Gehäuse auf, in welchem ein Kolben 14 längsverschieblich eingesetzt ist, welcher den an seinem Ende durch Stirndeckel 16 bzw. 18 verschlossenen Zylinder in zwei - abhängig von der Verschiebungsstellung des Kolbens 14 - größenveränderliche Arbeitsräume 20 bzw. 22 unterteilt.

An der in den Zeichnungsfiguren oberen Stirnseite des Kolbens 14 ist eine den Arbeitsraum 22 durchsetzende Kolbenstange 24 angeschlossen, welche abgedichtet durch den Deckel 18 hindurchgeführt ist und an ihrem äußeren freien Ende ein Kupplungselement 26 trägt, welches mit einem Kugelkopf 28 zur Verbindung mit einem weiteren, die Bewegungen eines (nicht gezeigten) Möbelteils übertragenden Bauelement versehen ist.

Der mit einer integral angformten, an der Innenwandung des Zylinders 12 anliegenden umlaufenden Dichtlippe 29 versehene Kolben 14 ist nicht direkt, sondern über einen eine Mittelöffnung 30 im Kolben 24 in vorgegebenem Maße längsverschieblich durchsetzenden Fortsatz 32 angeschlossen, wobei in der Mittelöffnung 30 und in der Außenwandung des Fortsatzes 32 Kanäle vorgesehen sind, die zusammengenommen Überström-Öffnungen 34 bilden, über welche in den Arbeitsräumen 20, 22 des Zylinders enthaltenes flüssiges Dämpfungsmedium vom Arbeitsraum 22 in den Arbeitsraum 20 und umgekehrt übertreten kann.

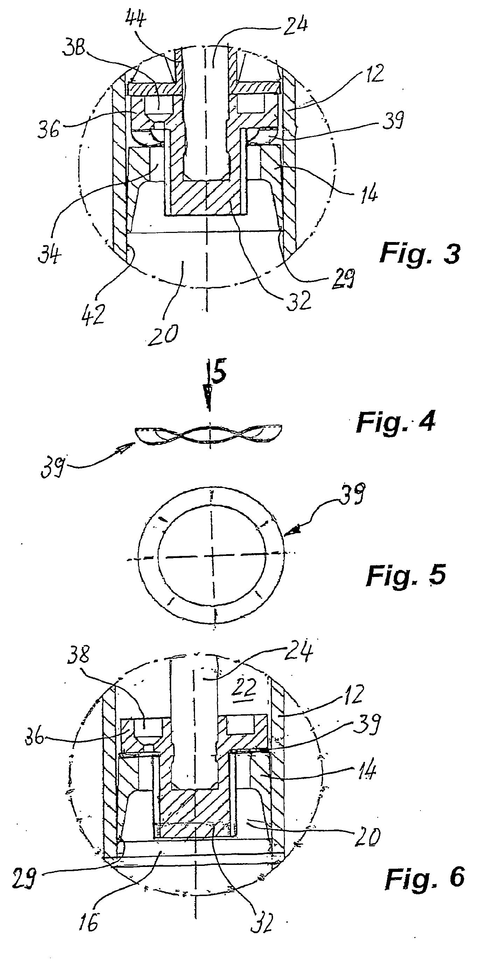

Am kolbenstangenseitigen Ende des Fortsatzes 32 ist eine Rückschlagscheibe 36 integral angesetzt, deren Außendurchmesser geringer als der lichte Innendurchmesser des Zylinders 12 bemessen ist, und welche - in Ausrichtung zu den Überström-Öffnungen 34 im Kolben 14 - mit Überström-Öffnungen 38 versehen ist, deren Querschnitt geringer als der Durchtrittsquerschnitt der Überström-Kanäle 34 im Kolben 14 bemessen ist. Zwischen den einander zugewandten Stirnseiten der Rückschlagscheibe 36 und des Kolbens 14 ist eine im dargestellten Fall als gewellte Ringscheibe aus dünnem federelastischem Metall ausgebildete Feder 39 angeordnet, welche den Kolben und die Rückschlagscheibe um das Mass der in Längsrichtung der Kolbenstange gemessenen Höhe der Wellungen der Feder auseinander zu drängen sucht, so dass sich zwischen den gegenüberliegenden Stirnseiten von Kolben und Rückschlagscheibe der in Fig. 2 und - insbesondere - in dem maßstäblich vergrö-ßerten Teilausschnitt der Fig. 3 erkennbare Abstand einstellt. Die Rückschlagscheibe 36 drückt bei einer von der in Figur 2 dargestellten Ausgangsposition ausgehenden Verschiebung der Kolbenstange 24 in Abwärtsrichtung auf die zugewandten Wellenbergen der Feder 39, wodurch diese zu einer ebenen Ringscheibe verformt wird, die dann auch ebenflächig auf der Stirnfläche des Kolbens 14 anliegt. Beim anschließenden Arbeitshub kann flüssiges Dämpfungsmedium vom Arbeitsraum 20 dann nur gedrosselt über die Überström-Öffnungen 38 in der Rückschlagscheibe 36 in den Arbeitsraum 22 übertreten. Der Gesamt-Querschnitt der Überström-Öffnungen 38 in der Rückschlagscheibe 36 bestimmt also den die Dämpfungswirkung aufbauenden Drosselquerschnitt der Vorrichtung 10.

Wenn umgekehrt die Kolbenstange 24 ausgehend von der in Figur 1 dargestellten Endstellung aus dem Zylinder herausgezogen wird, hebt sich die Rückschlagscheibe 36 unter gleichzeitiger Rückverformung der Feder in die gewellte Ausgangsform von der zugewandten Stirnseite des Kolbens 14 ab und das im Arbeitsraum 22 befindliche Dämpfungsmedium kann zusätzlich zu den Überström-Öffnungen 38 auch über den zwischen dem äußeren Umfang der Rückschlagscheibe 36 und der Zylinder-Innenwandung gebildeten Ringspalt in den Raum zwischen dem Zylinder 12 und der Rückschlagscheibe 36 und von dort über die Überström-Öffnungen 34 in den Arbeitsraum 20 übertreten. Da die Überström-Öffnungen 34 insgesamt einen größeren Querschnitt als die Überström-Öffnungen 38 aufweisen, werden also beim Rückhub keine oder deutlich geringere Dämpfungs- oder Bremskräfte auf die Kolbenstange 24 übertragen.

In dem in den Zeichnungsfiguren unteren Endabschnitt 40 weist der Zylinder 12 einen vergrößerten Durchmesser auf, so dass die Dichtlippe 29 des Kolbens 14 in diesem Endabschnitt 40 nicht dichtend an der Zylinder-Innenwandung anliegt, d.h. im Bereich des Endabschnitts 40 flüssiges Dämpfungsmedium auch über den Kolbenumfang zwischen den Arbeitsräumen 20 und 22 übertreten kann. Bei der Verschiebung des Kolbens 14 im Endabschnitt 40 sind daher keine oder allenfalls geringe Druckunterschiede im Dämpfungsmedium in den Arbeitsräumen 20 und 22 aufbaubar, was zur Folge hat, dass auch keine - oder nur vernachlässigbar geringe - Dämpfungskräfte während der Verschiebung des Kolbens 14 im Endabschnitt 40 aufgebaut werden.

Zur Verwirklichung einer sich verändernden Dämpfungs- bzw. Bremscharakteristik während des Arbeitshubs ist bei der Vorrichtung 10 im oberen Endbereich des Zylinders 12 in dessen Innenwandung ein sich über einen Teil der Innenwandung in Längsrichtung erstreckender Überström-Kanal 42 eingearbeitet, dessen Querschnitt sich vom oberen Ende her in Abwärtsrichtung verringert, so dass er also bei der Verschiebung des Kolbens 14 aus der in Figur 2 dargestellten Ausgangsposition eine sich im Durchtrittsquerschnitt verringernde Drosselöffnung bildet, die somit auch von der Verschiebungsstellung des Kolbens 14 abhängige veränderliche Drosselkräfte erzeugt.

Die die Verringerung des Gesamtvolumens der Arbeitsräume 20 und 22 im Zylinder beim Dämpfungshub durch das Volumen der zunehmend in den Zylinder 12 eintretenden Kolbenstange 24 erforderliche Volumen-Ausgleichsvorrichtung ist bei Vorrichtung 10 in einer integralen Verlängerung 12a am oberen Ende des Zylinders vorgesehen. Im Bereich der Verlängerung 12a ist in der entsprechenden langgestreckten Führungshülse 44 für die Kolbenstange 24 und der Innenwandung der Verlängerung ein Ringraum 46 gebildet, in den das durch die Kolbenstange 24 verdrängte Volumen des Druckmediums übertreten kann. Um das beim Einschieben der Kolbenstange 24 in den Ringraum 46 übergetretene Dämpfungsmedium beim Zurückziehen der Kolbenstange wieder in die eigentlichen Arbeitsräume 22 und 20 zurückzuführen, ist der Ringraum 46 durch einen Formkörper 48 aus einem elastisch zusammendrückbaren Material, beispielsweise einem geschlossenzelligen Schaumstoff aus Gummi oder einem elastomeren Kunststoff gefüllt, welcher sich durch den Druck des übertretenden flüssigen Dämpfungsmediums zusammendrückt, bei sich vergrö-ßerndem Volumen in den Arbeitsräumen 20, 22 durch das Ausfahren der Kolbenstange 24 jedoch wieder entspannt und so das zuvor verdrängte Dämpfungsmedium wieder in die Arbeitsräume zurückverdrängt.

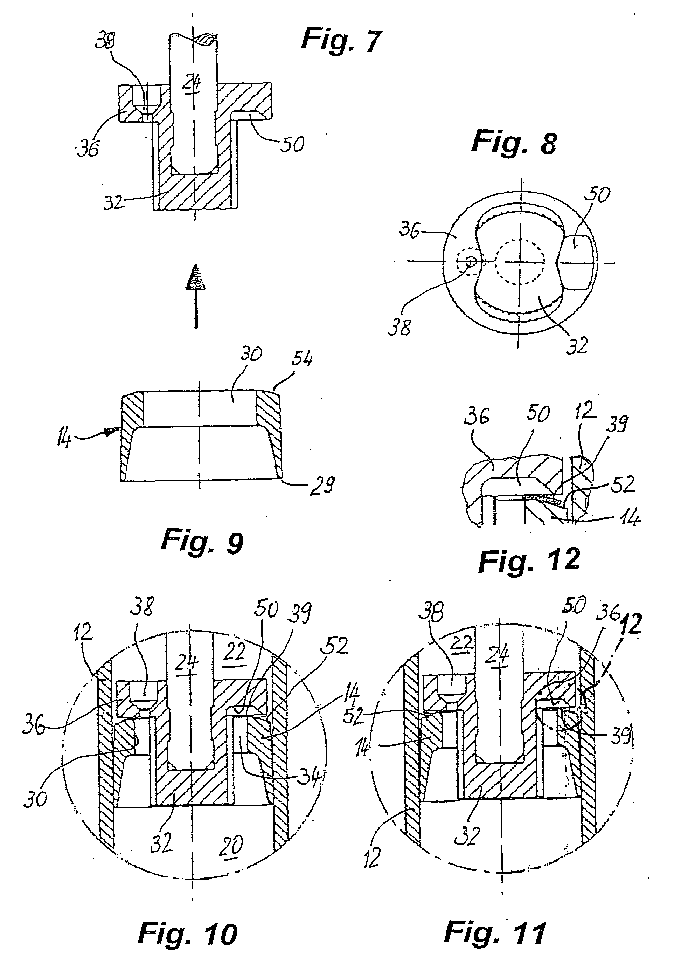

In den Fig. 7 bis 9 sind relativ geringfügige Abänderungen der Rückschlagscheibe 36 und des Kolbens 14 des vorstehend in Verbindung mit den Fig. 1 bis 6 beschriebenen Ausführungsbeispiels der erfindungsgemäßen Vorrichtung 10 beschrieben, durch welche eine zusätzliche Überlast-Sicherungsfunktion in dem Sinne erreicht wird, dass bei einem - gegebenenfalls - in einem Arbeitsraum auftretenden unzulässigen Überdruck eine zusätzliche partielle Verformung der Feder 39 möglich ist, welche ein Überströmweg für das unter Überdruck stehende Dämpfungsmedium in den anderen Arbeitsraum eröffnet, so dass der Überdruck abgebaut und so Fehlfunktionen bzw. Zerstörungen der Vorrichtung 10 vermieden werden.

Die getroffene Änderung an der Rückschlagscheibe 36 (Fig. 7 und 8) besteht in der zusätzlichen Anordnung einer Vertiefung 50 in der dem Kolben 14 zugewandten unteren Stirnfläche, welche zum äußeren Rand der Scheibe hin geschlossen ist und sich radial einwärts bis in den Übergangsbereich vom scheibenförmigen Teil der Rückschlagscheibe 36 in Richtung zum Kolben vortretenden Fortsatz 32 erstreckt. Die in der Unterseite der Rückschlagscheibe 36 vorgesehene Vertiefung 50 ist dabei in einem zu der bzw. den in der Rückschlagscheibe 36 vorgesehenen Überström-Öffnungen 38 versetzten Bereich angeordnet. Die beim abgeänderten Kolben 14 (Fig. 9) vorgesehene Abänderung besteht darin, dass die ursprünglich ebenflächige, zur Rückschlagscheibe 36 weisende ringförmige Stirnfläche des Kolbens entlang eines äußeren Randbereichs mit einer umlaufenden schrägen Anfasung 52 versehen ist. Die Anfasung 52 ermöglicht es, dass sich die die Drosselcharakteristik steuernde federelastische gewellte Ringscheibe 39 ausgehend von der der Lage der Bauteile in Fig. 6 entsprechenden Darstellung in Fig. 10 bei einem im Arbeitsraum 20 auftretenden unzulässigen Überdruck entsprechend der Anfasung 52 durch den Überdruck im Bereich der Vertiefung 50 in Anlage an die Anfasung verformen kann, wodurch ein Übertrittsweg für das unter Überdruck stehende Dämpfungsmedium zwischen dem die Vertiefung außen abschließenden Rand der Rückschlagscheibe 36 und der diesem Rand zugewandten Oberseite der in die ebenflächige Form verformten Feder entsteht. Dieser Zustand ist in Fig. 11 und - in vergrößertem Maßstab -zusätzlich in Fig. 12 - veranschaulicht.

Sobald der Überdruck im Arbeitsraum 20 durch Überströmen des dort befindlichen unter Überdruck stehenden Druckmediums zum Arbeitsraum 22 auf einen zulässigen Druckwert abgesenkt ist, verformt sich die als Ringscheibe ausgebildete Feder wieder in den in Fig. 10 veranschaulichten ebenflächigen Zustand und ein Druckausgleich ist dann nur noch über die ÜberströmÖffnung(en) 38 in der Rückschlagscheibe 36 möglich.

## Patentansprüche

1. Vorrichtung (10) zum Dämpfen bzw. Abbremsen der Bewegung von relativ zu einem unbeweglichen Möbelteil beweglichen Möbelteilen zumindest während eines Teilabschnitts der gesamten Relativbewegung mit einem Zylinder (12), in welchem ein Kolben (14) längsverschieblich gelagert ist, welcher innerhalb des Zylinders (12) auf seinen gegenüberliegenden Stirnseiten in Abhängigkeit von seiner Verschiebungsstellung größenveränderliche, mit einem flüssigen Dämpfungsmedium gefüllte Arbeitsräume (20; 22) bildet, die über im Kolben (14) vorgesehene Überström-Öffnungen (34, 38) oder Kanäle (42) einen gedrosselten Übertritt des flüssigen Dämpfungsmediums von einem zum anderen Arbeitsraum (20; 22) ermöglichen, wobei auf einer Seite des Kolbens (14) eine abgedichtet aus dem zugeordneten Ende des Zylinders herausgeführte Kolbenstange (24) angeschlossen ist, über deren kolbenabgewandtes äußeres Ende die Bewegung des zu dämpfenden oder abzubremsenden Möbelteils auf den Kolben (14) übertragen wird, und zum Ausgleich des sich durch das Volumen der Kolbenstange (24) beim Einfahren verändernden Gesamtvolumens der Arbeitsräume (20; 22) eine Volumen-Ausgleichsvorrichtung vorgesehen und der Drosselquerschnitt der Überström-Öffnungen (34; 38) oder Kanäle (42) in Abhängigkeit von der Verschiebungsstellung des Kolbens (14) derart veränderlich ausgebildet ist, dass sich während des Dämpfungs- oder Bremshubs eine sich ändernde Dämpfungs- bzw. Bremscharakteristik ergibt, und die Kolbenstange (24) an dem mit Überström-Öffnungen (34) versehenen Kolben (14) in an sich bekannter Weise um einen vorgegebenen Längshub verschieblich angekoppelt ist und in ihrem kolbenzugewandten Endbereich eine mit Überström-Öffnungen (38) mit im Vergleich zum Querschnitt der Kolben-Überström-Öffnungen (34) verringertem Drosselquerschnitt versehene Rückschlagscheibe (36) verringerten Außendurchmessers aufweist, welche beim dämpfenden bzw. bremsenden Arbeitshub in dichtende Anlage an die zugewandte Kolben-Stirnseite, beim Rückhub dagegen in eine von der Kolben-Stirnseite beabstandete Stellung verschoben ist,
**dadurch gekennzeichnet,**
**dass** zwischen der Rückschlagscheibe (36) und dem Kolben (14) Feder (39) angeordnet ist, welche eine die einander zugewandten Stirnseiten der Rückschlagscheibe (36) und des Kolbens (14) in die von einander beabstandete Stellung vorspannt.

2. Vorrichtung nach Anspruch 1, **dadurch gekennzeichnet, dass** die Feder (39) die Form einer in Umfangsrichtung gewellten Scheibe aus federelastischem Metall aufweist.

3. Vorrichtung nach Anspruch 2, **dadurch gekennzeichnet, dass** die Feder (39) zwischen den einander zugewandten Stirnseiten der Rückschlagscheibe (36) und des Kolbens (14) angeordnet ist.

4. Vorrichtung nach einem der Ansprüche 1 bis 3, **dadurch gekennzeichnet, dass** zur Änderung der Dämpfungs- bzw. Bremscharakteristik in der Zylinder-Innenwandung wenigstens ein zumindest abschnittsweise in Hubrichtung verlaufender vertiefter Überströmkanal (42) vorgesehen ist, dessen Querschnitt in Hubrichtung entsprechend der gewünschten Drosselcharakteristik veränderlich ausgebildet ist.

5. Vorrichtung nach Anspruch 4, **dadurch gekennzeichnet, dass** der Querschnitt des wenigstens einen Überströmkanals (42) sich beim Dämpfungshub von der Ausgangs-Hubstellung ausgehend in Zylinder-Längsrichtung verringert.

6. Vorrichtung nach einem der Ansprüche 1 bis 5, **dadurch gekennzeichnet, dass** der Arbeitsraum (22) des Zylinders (12) in einem dem abschließenden Dämpfungshub des Kolbens (14) zugeordneten Endbereich (40) einen vergrößerten Durchmesser aufweist.

7. Vorrichtung nach einem der Ansprüche 1 bis 6, **dadurch gekennzeichnet, dass** die Volumen-Ausgleichsvorrichtung einen mit dem von der Kolbenstange (24) durchsetzten Arbeitsraum (22) des Zylinders (12) verbundenen, durch aus dem Arbeitsraum übertretendes flüssiges Druckmedium volumenvergrößerbaren Ausgleichsraum aufweist, dessen Volumen sich bei Rückführung des Dämpfungsmediums in den Arbeitsraum (22) wieder verkleinert.

8. Vorrichtung nach Anspruch 7, **dadurch gekennzeichnet, dass** der Ausgleichsraum in einer an den von der Kolbenstange durchsetzten Arbeitsraum anschließenden Verlängerung (12a) des Zylinders (12) ausgebildet ist.

9. Vorrichtung nach Anspruch 8, **dadurch gekennzeichnet, dass** der Ausgleichsraum als zwischen einer die Kolbenstange (24) umgebenden langgestreckten Führungshülse (44) und der Innenwandung der Zylinder-Verlängerung (12a) vorgesehener Ringraum (46) ausgebildet ist, welcher zumindest zum größeren Teil durch einen durch übertretendes flüssiges Druckmedium elastisch zusammendrückbaren Einsatz (48) ausgefüllt ist.

10. Vorrichtung nach Anspruch 9, **dadurch gekennzeichnet, dass** der elastische zusammendrückbare Einsatz (48) ein dem Ringraum (46) im Wesentlichen entsprechend geformter Ringkörper ist, welcher flüssigkeitsdichte äußere Wandungen aufweist und innerhalb der äußeren Wandungen mit einem elastisch zusammendrückbaren Medium gefüllt ist.

11. Vorrichtung nach Anspruch 10, **dadurch gekennzeichnet, dass** der Einsatz (48) ein Formkörper aus geschlossenzelligem Schaumstoff ist.

12. Vorrichtung nach einem der Ansprüche 1 bis 11, **dadurch gekennzeichnet, dass** der Kolben (14) im radial äusseren Bereich seiner zur Rückschlagscheibe (36) weisenden Stirnfläche zumindest über einen Teilabschnitt des Kolben-Umfangs mit einer schrägen Anfasung (52) versehen ist, und dass in der zum Kolben (14) weisenden im wesentlichen ebenflächigen Stirnseite der Rückschlagscheibe (36) zu der bzw. den ÜberströmÖffnung(en) (38) versetzt wenigstens eine im der Innenfläche des Zylinders (12) gegenüberliegenden äusseren radialen Randbereich geschlossene, im radial inneren Bereich eine Mittelöffnung (30) im Kolben (14) übergreifende Vertiefung (50) vorgesehen ist.

## Claims

1. Device (10) for damping or slowing the movement of furniture parts, which are movable relative an immovable furniture parts, during a portion of the total relative movement, with a cylinder (12) in which a piston (14) is mounted so as to be longitudinally displaceable and forms working chambers (20; 22) within the cylinder (12) on opposing end faces thereof, wherein the working chambers are variable in size as a function of the displaced position of the piston, are filled with a fluid damping medium and by way of overflow ports (34, 38) or channels (42) provided in the piston (14) allow a throttled overflow of the fluid damping medium from one working chamber (20; 22) to the other, wherein on one face of the piston (14) there is attached a piston rod (24) which is guided in a sealed manner out of the associated end of the cylinder and which by way of its outer end remote from the piston transmits to the piston (14) the movement of the furniture part to be damped or slowed, and for equalisation of the total volume of the working chambers (20; 22) which varies due to the volume of the piston rod (24) as it travels in a volume equalising device is provided and the throttle cross-section of the overflow ports (34; 38) or channels (42) is designed to be variable as a function of the displaced position of the piston (14) in such a way that during the damping or slowing stroke a changing damping or slowing characteristic is produced, and the piston rod (24) is coupled to the piston (14) provided with overflow ports (34) so as to be displaceable in a manner which is known *per se* by a predetermined longitudinal path and has in its end region facing the piston a non-return plate (36) of reduced external diameter which is provided with overflow ports (38) with a reduced throttle cross-section by comparison with the cross-section of the piston overflow ports (34), wherein during the damping or slowing working stroke the non-return plate is in sealed abutment on the facing end face of the piston, but during the return stroke it is displaced into a position spaced from the end face of the piston, **characterised in that** between the non-return plate (36) and the piston (14) there is disposed a spring (39) which biases the end faces which face one another of the non-return plate (36) and of the piston (14) into the position in which they are spaced from one another.

2. Device as claimed in Claim 1, **characterised in that** the spring (39) has the shape of a disc made from resilient metal which is corrugated in the circumferential direction.

3. Device as claimed in Claim 2, **characterised in that** the spring (39) is disposed between the end faces which face one another of the non-return plate (36) and of the piston (14).

4. Device as claimed in any one of Claims 1 to 3, **characterised in that** in order to change the damping or slowing characteristic, at least one recessed overflow channel (42) which extends at least in portions in the direction of travel is provided in the internal wall of the cylinder, the cross-section of this overflow channel being constructed so as to be variable according to the desired throttle characteristic.

5. Device as claimed in Claim 4, **characterised in that** during the damping stroke the cross-section of the at least one overflow channel (42) decreases in the longitudinal direction of the cylinder starting from the initial stroke position.

6. Device as claimed in any one of Claims 1 to 5, **characterised in that** the working chamber (22) of the cylinder (12) has an enlarged diameter in an end region (40) associated with the concluding damping stroke of the piston (14).

7. Device as claimed in any one of Claims 1 to 6, **characterised in that** the volume equalising device has an equalising chamber which is connected to the working chamber (22) of the cylinder (12) through which the piston rod (24) passes and which can be increased in volume by fluid pressure medium overflowing from the working chamber, the volume of the equalising chamber decreasing again as the damping medium returns to the working chamber (22).

8. Device as claimed in Claim 7, **characterised in that** the equalising chamber is constructed in an extension (12a) of the cylinder (12) adjoining a working chamber through which the piston rod passes.

9. Device as claimed in Claim 8, **characterised in that** the equalising chamber is constructed as an annular chamber (46) which is provided between an elongate guide sleeve (44) surrounding the piston rod (24) and the internal wall of the cylinder extension (12a) and which is filled at least for the most part by an insert (48) which can be resiliently compressed by overflowing fluid pressure medium.

10. Device as claimed in Claim 9, **characterised in that** the resiliently compressible insert (48) is an annular body which is shaped substantially corresponding to the annular chamber (46), has fluid-tight outer walls and within the outer walls is filled with a resiliently compressible medium.

11. Device as claimed in Claim 10, **characterised in that** the insert (48) is a shaped body made from closed-cell foam material.

12. Device as claimed in any one of Claims 1 to 11, **characterised in that** the piston (14) is provided over at least a portion of the piston circumference with an oblique chamfer (52) in the radially outer region of its end face directed towards the non-return plate (36), and that at least one recess (50), which is closed in the outer radial edge region opposite the inner face of the cylinder (12) and in the radially inner region engages over a central port (30) in the piston (14), is provided offset with respect to the overflow port(s) (38) in the substantially planar end face of the non-return plate (36) directed towards the piston (14).

## Revendications

1. Dispositif (10) pour amortir ou freiner le déplacement de parties de meuble mobiles par rapport à une partie de meuble non mobile, au moins sur une section partielle de l'ensemble du déplacement relatif, comprenant un cylindre (12),
dans lequel un piston (14) est monté de manière à pouvoir se déplacer longitudinalement, lequel piston forme à l'intérieur du cylindre (12), sur ses faces frontales opposées, en fonction de sa position de déplacement, des espaces de travail (20 ; 22) de taille variable, remplis d'un milieu d'amortissement liquide, qui permettent, via des ouvertures de débordement (34, 38) ou des canaux (42) prévus dans le piston (14), un transfert par étranglement du milieu d'amortissement liquide d'un espace de travail à l'autre (20 ; 22), dans lequel, sur un côté du piston (14), est raccordée une tige de piston (24) extraite de manière étanche par l'extrémité affectée du cylindre, par l'extrémité externe, opposée au piston, duquel le déplacement de la partie de meuble à amortir ou à freiner est transféré au piston (14), et, pour compenser le volume total des espaces de travail (20 ; 22), qui varie en fonction du volume de la tige de piston (24) lorsqu'elle est rentrée, il est prévu un dispositif de compensation de volume et la section transversale d'étranglement des ouvertures de débordement (34 ; 38) ou des canaux (42) est variable en fonction de la position de déplacement du piston (14) de manière à obtenir une caractéristique d'amortissement ou de freinage variable pendant la course d'amortissement ou de freinage, et la tige de piston (24) sur le piston (14) pourvu d'ouvertures de débordement (34) est couplée de manière connue en soi afin de pouvoir se déplacer sur une course longitudinale prédéterminée et présente, dans sa zone d'extrémité tournée vers le piston, un disque anti-retour (36), de diamètre externe réduit, pourvu d'ouvertures de débordement (34) de section transversale d'étranglement réduite par rapport à la section transversale des ouvertures de débordement de piston (34) et qui est déplacé lors de la course de travail d'amortissement ou de freinage en appui étanche contre la face frontale tournée vers le piston, qui est par contre, lors de la course de rappel, déplacé dans une position distante de la face frontale du piston, **caractérisé en ce qu'**entre le disque anti-retour (36) et le piston (14) est agencé un ressort (39), qui place sous précontrainte l'une des faces frontales tournée vers l'autre du disque anti-retour (36) et du piston (14) dans la position distante l'une de l'autre.

2. Dispositif selon la revendication 1, **caractérisé en ce que** le ressort (39) présente la forme d'un disque en métal élastique ondulé dans la direction périphérique.

3. Dispositif selon la revendication 2, **caractérisé en ce que** le ressort (39) est agencé entre les faces frontales tournées l'une vers l'autre du disque anti-retour (36) et du piston (14).

4. Dispositif selon l'une quelconque des revendications 1 à 3, **caractérisé en ce que**, pour modifier la caractéristique d'amortissement ou de freinage, il est prévu, dans la paroi interne du cylindre, au moins un canal de débordement renfoncé (42) s'étendant au moins par sections dans la direction de la course, canal dont la section transversale est formée de manière variable dans la direction de la course, en fonction de la caractéristique d'étranglement souhaitée.

5. Dispositif selon la revendication 4, **caractérisé en ce que** la section transversale du au moins un canal de débordement (42) se réduit lors de la course d'amortissement à partir de la position de la course de départ dans la direction longitudinale du cylindre.

6. Dispositif selon l'une quelconque des revendications 1 à 5, **caractérisé en ce que** l'espace de travail (22) du cylindre (12) présente un diamètre plus grand dans une zone d'extrémité (40) affectée à la course d'amortissement finale du piston (14).

7. Dispositif selon l'une quelconque des revendications 1 à 6, **caractérisé en ce que** le dispositif de compensation de volume présente un espace de compensation raccordé à l'espace de travail (22) du cylindre (12) traversé par la tige de piston (24), dont le volume peut augmenter sous l'effet du milieu de pression liquide débordant de l'espace de travail et dont le volume se réduit à nouveau lors du retour du milieu d'amortissement dans l'espace de travail (22).

8. Dispositif selon la revendication 7, **caractérisé en ce que** l'espace de compensation est formé dans un prolongement (12a) du cylindre (12) qui suit l'espace de travail traversé par la tige de piston.

9. Dispositif selon la revendication 8, **caractérisé en ce que** l'espace de compensation se présente sous la forme d'un espace annulaire (46) prévu entre une douille de guidage (44) allongée entourant la tige de piston (24) et la paroi interne du prolongement de cylindre (12a), lequel espace annulaire est comblé au moins en majeure partie d'un insert (48) qui peut être comprimé élastiquement par un milieu de pression liquide débordant.

10. Dispositif selon la revendication 9, **caractérisé en ce que** l'insert élastique susceptible d'être comprimé (48) est un corps annulaire formé sensiblement en fonction de l'espace annulaire (46), qui présente des parois externes étanches aux liquides et est rempli à l'intérieur des parois externes d'un milieu susceptible d'être comprimé élastiquement.

11. Dispositif selon la revendication 10, **caractérisé en ce que** l'insert (48) est un corps de moulage en matériau expansé à cellules fermées.

12. Dispositif selon l'une quelconque des revendications 1 à 11, **caractérisé en ce que** le piston (14) est pourvu, dans la zone externe radialement de sa face frontale tournée vers le disque anti-retour (36), d'un chanfrein oblique (52), au moins sur une section partielle de la périphérie du piston, et **en ce qu'**il est prévu dans la face frontale sensiblement plane du disque anti-retour (35) tourné vers le piston (14), de manière décalée par rapport à la ou aux ouvertures de débordement (38), au moins un renfoncement (50) fermé dans la zone marginale externe radiale opposée à la surface interne du cylindre (12) et recouvrant, dans la zone interne radialement, une ouverture centrale (30) du piston (14).
